# EUROPÄISCHE PATENTSCHRIFT

(11) **EP 3 931 155 B1**
(45) Veröffentlichungstag und Bekanntmachung des Hinweises auf die Patenterteilung: **07.06.2023**
(21) Anmeldenummer: 20707645.6
(22) Anmeldetag: 28.02.2020
(51) Int. Cl.: C02F 1/48

(54) **WASSERAUFBEREITER**
WATER TREATMENT DEVICE
DISPOSITIF DE TRAITEMENT DE L'EAU

(30) Priorität: 01.03.2019 CH 2542019
(43) Veröffentlichungstag der Anmeldung: 05.01.2022
(73) Patentinhaber: Fabio and Markus turbine engineering GmbH, 8807 Freienbach (CH)
(72) Erfinder: HÜTHER, Fabio, 8772 Ermatingen (CH)
(74) Vertreter: Gachnang AG Patentanwälte
(86) Internationale Anmeldenummer: PCT/EP2020/055358
(87) Internationale Veröffentlichungsnummer: WO 2020/178200

(56) Entgegenhaltungen:
- DE-A1- 19 519 715
- DE-B3-102004 001 059
- FR-A1- 2 128 678

## Beschreibung

Die Erfindung betrifft einen Wasseraufbereiter, ein Gerät mit einer Wasserleitung und ein Verfahren zum Aufbereiten von Leitungswasser gemäss den Merkmalen der Patentansprüche 1, 9 und 10.

Kalkhaltiges Trink- oder Betriebswasser kann unerwünschte Ablagerungen von Kalk führen, insbesondere in Leitungen, Geräten und an Orten, wo dieses Wasser verdunstet. Wird kalkhaltiges Wasser über 60°C erhitzt, wird die Bildung von Kalk- oder Kesselstein stark begünstigt. Allgemein sind härtebildende Salze in ionisierter Form im Wasser gelöst. Beim Ablagern ordnen sich positiv und negativ geladene Ionen zu Gittern bzw. Kristallen.

Es ist bekannt, dass Magnetfelder die Kristallbildung beeinflussen können. Insbesondere können mit elektromagnetischen Wechselfeldern ständig wechselnde Kräfte auf die im Wasser gelösten Ionen ausgeübt werden. Dies erschwert die Ausbildung grösserer Kristalle. Aufgrund von Inhomogenitäten können sich Mikrokristalle weniger gut in die Gitterstruktur der Kristalle einordnen. Kalkablagerungen von Wasser, das mit elektromagnetischen Wechselfeldern behandelt worden ist, haben deshalb geringere Haftungskräfte.

Ein Nachteil der Wasserbehandlung mit elektromagnetischen Wechselfeldern ist die notwendige Bereitstellung von elektrischer Energie.

Aus der DE19519715A1 ist ein Wasseraufbereiter bekannt, der ohne elektrische Energie funktioniert. In einem Gehäuse ist anschliessend an einen Einlauf ein Trichter angeordnet. Der Innendurchmesser dieses Trichters ist einlaufseitig am grössten. Insbesondere ist der Durchmesser des Trichters an dieser Stelle grösser als der Innendurchmesser des Einlaufs. Ausgangsseitig hat der Trichter einen kleineren Innendurchmesser, der im Wesentlichen dem Innendurchmesser eines anschliessenden Aktivierungsrohrteils entspricht. Das Aktivierungsrohrteil ist von zwei halbschalenförmigen Permanentmagneten mit innenliegendem magnetischem Südpol umgeben.

Anschliessend an das Aktivierungsrohrteil folgt ein Auslauf. Die Innendurchmesser des Einlaufs und des Auslaufs entsprechen im Wesentlichen dem Innendurchmesser des Aktivierungsrohrteils.

Anliegend an der Innenseite des Trichters ist eine kegelförmig verbogene Spiralfeder aus Federdraht angeordnet. Aufgrund der Verengung im Trichter wird die Strömungsgeschwindigkeit von einströmendem Wasser erhöht. Die Spiralstruktur bewirkt eine Verwirbelung des Wasserstroms. Anschliessend wird der Wasserstrom mit hoher Strömungsgeschwindigkeit durch das Magnetfeld geführt. Aufgrund der erhöhten Strömungsgeschwindigkeit ist der Wasserfluss nur für vergleichsweise kurze Dauer dem Magnetfeld ausgesetzt. Die Wirkung der Spiralstruktur erfolgt nur nahe der Trichterwand. Bei kleinen Strömungsgeschwindigkeiten ist der Verwirbelungseffekt der Spiralstruktur gering. An der Spirale können sich Kalk und Schmutzpartikel ablagern.

Eine Aufgabe der vorliegenden Erfindung liegt deshalb darin, einen alternativen Wasseraufbereiter und ein Verfahren zum Aufbereiten von Wasser zu schaffen die ohne Zufuhr elektrischer Energie eine wirksame Aufbereitung von fliessendem Wasser ermöglichen und die Bildung von Kalkstein erschweren.

Diese Aufgabe wird gelöst durch die Merkmale der Patentansprüche 1, 9 und 10.

Der erfindungsgemässe Wasseraufbereiter umfasst eine Wirbeldüse, kurz Düse genannt, die in einer Durchströmkammer angeordnet ist und auf einfache Art eine vergleichsweise starke Verwirbelung des Wasserstroms ermöglicht. In einem Strömungskanal der Wirbeldüse wird der Wasserstrom von einer axialen Strömungsrichtung umgelenkt und in eine rotierende Strömung transformiert. In einem ausgangsseitigen Abschnitt der Düse nimmt der freie Strömungsquerschnitt des Strömungskanals in axialer Richtung trichterartig zu. In diesem Bereich und/oder weiter stromabwärts wirken ein oder mehrere peripher an der Durchströmkammer angeordnete Magnete auf den Wasserstrom. Vorzugsweise sind mehrere Magnete so angeordnet, dass die magnetische Flussdichte in der Durchströmkammer lokal grosse Unterschiede aufweist. Die Düse ist vorzugsweise aus einem Material gefertigt, das die magnetische Flussdichte nicht oder nur unwesentlich beeinflusst. Der sich vergrössernde Strömungsquerschnitt bewirkt im Wasserstrom eine Druckänderung, die den Effekt verstärken, den die Magnete auf geladene oder polare Teilchen im Wasserstrom ausüben.

Beim und/oder nach dem ausgangsseitigen Ende der Trichteröffnung wird ein Teil des rotierenden Wasserstroms nahe an den Magneten vorbeigeführt, wo die magnetische Flussdichte besonders gross ist.

Die starke Verwirbelung des Wasserstroms, Druckänderungen aufgrund unterschiedlicher Strömungsquerschnitte und lokal unterschiedliche Stärken der magnetischen Flussdichte bewirken in Kombination miteinander schnell ändernde Kräfte, die unterschiedlich auf positiv und negativ geladene Ionen wirken. Dies verhindert sehr wirksam die regelmässige Anordnung von Ionen in einem Kristallgitter. Selbst bei kleinen Strömungsgeschwindigkeiten in axialer Richtung bewirkt die Düse eine starke Verwirbelung des Wasserstroms. Dies wird dadurch begünstigt, dass in der Düse der gesamte Wasserstrom aus der axialen Flussrichtung umgelenkt wird. Zudem kann die Rotationsgeschwindigkeit der Strömung durch Wahl geeigneter Durchmesser von Eintrittsöffnungen der Düse beeinflusst werden. Kleinere Querschnitte von Eintrittsöffnungen bewirken höhere Rotationsgeschwindigkeiten. Düsen können somit entsprechend der erwarteten Strömungsgeschwindigkeiten bei unterschiedlichen Anwendungen skaliert und optimiert werden. Wasseraufbereiter mit solchen Düsen können für den Einbau in Geräten wie z.B. Kaffeemaschinen, Waschmaschinen oder Geschirrspülern optimiert werden. Mögliche weitere Anwendungen sind beispielsweise Wasserleitungen in Gebäuden, wobei der Einbau in eine Wasserleitung an einer beliebigen Stelle des Wasserleitungsnetzes erfolgen kann, beispielsweise in der Nähe eines Gebäudeanschlusses, vor einem Boiler oder dezentral bei einem oder mehreren Wasserauslässen.

Anhand einiger Figuren wird die Erfindung im Folgenden näher beschrieben. Dabei zeigen
- Figur 1: einen Längsschnitt und einen Querschnitt eines Wasseraufbereiters,
- Figur 2: die Anordnung aus Figur 1 mit zusätzlichen Strömungspfeilen,
- Figur 3: einen Querschnitt und eine Seitenansicht eines Düsenrohrs im Bereich einer Einlassbohrung,
- Figur 4: einen Querschnitt des Wasseraufbereiters aus Figur 1 im Bereich der Wirbeldüse mit magnetischen Feldlinien und Strömungspfeilen.

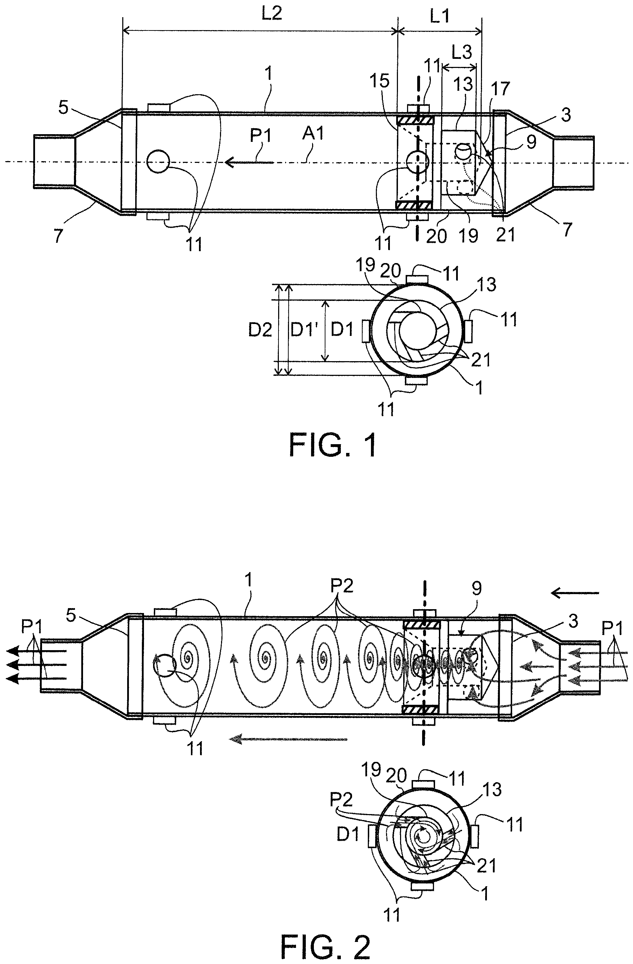

Figur 1 zeigt einen Längsschnitt und einen Querschnitt einer beispielhaften Ausführungsform eines Wasseraufbereiters. Der Wasseraufbereiter umfasst ein vorzugsweise zylindrisches Mantelrohr 1 mit einer Einlassöffnung 3 und einer Auslassöffnung 5. Diese definieren eine durch einen Pfeil P1 dargestellte primäre Strömungsrichtung innerhalb des Mantelrohrs 1 in Richtung der Mantelrohrachse A1, wobei Wasser durch die Einlassöffnung 3 in das Mantelrohr 1 ein- und durch die Auslassöffnung 5 ausströmt. Das Mantelrohr 1 kann z.B. mittels Fittings 7 mit angrenzenden Leitungsabschnitten einer Wasserleitung (nicht dargestellt) verbunden werden. Falls erforderlich, können Fittings unterschiedlichen Aussen- oder Innendurchmesser der Wasserleitung und des Mantelrohrs 1 überbrücken.

Figur 2 zeigt die Anordnung aus Figur 1, wobei die rotierende sekundäre Strömungsrichtung zusätzlich durch Spiralpfeile P2 dargestellt ist.

Im Inneren des Mantelrohrs 1 ist eine Düse 9 zwischen einem einlassseitigen Abschnitt und einem auslassseitigen Abschnitt des Mantelrohrs 1 angeordnet. Die Düse 9 umfasst ein Düsenrohr 13 mit einer Mündungsöffnung 15 im auslassseitigen bzw. hinteren Abschnitt des Mantelrohrs 1.

Das einlassseitige bzw. vordere Ende des Düsenrohrs 13 ist durch eine Anströmkappe 17 verschlossen.

Der vom Düsenrohr 13 ummantelte Innenraum begrenzt eine rotationssymmetrische Wirbelkammer 19 auf einer Länge L1. Die Symmetrieachse der Wirbelkammer 19 entspricht der Achse A1 des Mantelrohrs 1. Durch den auslassseitig an die Düse 9 anschliessenden Abschnitt des Mantelrohrs 1 wird die Wirbelkammer 19 um eine Länge L2 verlängert.

In einem einlassseitigen bzw. vorderen Abschnitt hat das Düsenrohr 13 einen Aussendurchmesser D1, der kleiner ist als der Innendurchmesser D2 des Mantelrohrs 1 in diesem Bereich. Die Wandungen des Düsenrohrs 13 und des Mantelrohrs 1 begrenzen in diesem Bereich einen zur Einlassöffnung 3 hin offenen Ringraum 20.

In einem an den Ringraum 20 angrenzenden auslassseitigen bzw. hinteren Abschnitt des Düsenrohrs 13 entspricht dessen Aussendurchmesser D1' im Wesentlichen dem Innendurchmesser D2 des Mantelrohrs 1 in diesem Bereich. Der hintere Abschnitt des Düsenrohrs 13 ist z.B. durch Einpressen oder Verschrauben oder mittels einer anderen geeigneten Fügetechnik kraft-, form- oder stoffschlüssig dicht mit dem Mantelrohr 1 verbunden.

Im vorderen Abschnitt des Düsenrohrs 13 umfasst dessen Wandung mindestens eine durchgehende Einlassbohrung 21. Bei der in Figur 1 dargestellten Ausführungsform umfasst das Düsenrohr 13 drei gleichmässig verteilt angeordnete Einlassbohrungen 21. Jede dieser Einlassbohrungen 21 verbindet den Ringraum 20 und somit den einlassseitigen Abschnitt des Mantelrohrs 1 mit der zum auslassseitigen Abschnitt des Mantelrohrs 1 hin offenen Wirbelkammer 19. Jede Einlassbohrung 21 ist vorzugsweise so angeordnet und ausgerichtet, dass sie tangential in die Wirbelkammer 19 mündet. Dies bewirkt, dass durch die Einlassöffnungen 21 in die Wirbelkammer 19 strömendes Wasser effizient verwirbelt wird. Dabei wird dem Wasserstrom durch die Umlenkung eine um die Mantelrohrachse A1 rotierende sekundäre Strömungsrichtung aufgeprägt.

Falls das Düsenrohr 13 mehr als eine Einlassbohrung 21 umfasst, sind diese vorzugsweise rotationssymmetrisch angeordnet. Sie haben demnach bezüglich der Symmetrieachse A1 die gleiche axiale Lage. Alternativ könnten solche Einlassbohrungen 21 auch axial versetzt zueinander angeordnet sein.

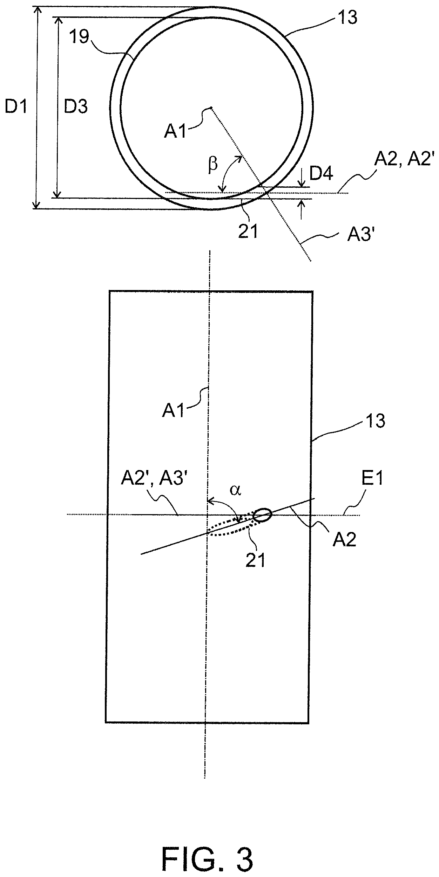

Wie in Figur 3 dargestellt, können die Achsen A2 der Einlassbohrungen 21 relativ zur Richtung der Symmetrieachse A1 unter einem Neigungswinkel α angeordnet sein, der vorzugsweise 90° oder weniger beträgt und insbesondere im Bereich von etwa 60° bis etwa 90° liegen kann. Der Neigungswinkel α kann für jede Einlassbohrung 21 individuell vorgegeben sein. Neigungswinkel α können auch Werte haben, die grösser als 90° sind. Dies bewirkt, dass durch die jeweiligen Einlassbohrungen 21 strömendes Wasser mit einem Strömungsanteil entgegen der primären Strömungsrichtung P1 beaufschlagt wird.

Für jede Einlassbohrung 21 kann zudem ein individueller Lagewinkel β vorgegeben sein. Der Lagewinkel β ist jener Winkel, den die Projektion A2' der Achse A2 der Einlassbohrung 21 und die Achse A3' einer fiktiven Radialbohrung an derselben Eintrittstelle des Düsenrohrs 13 in einer Normalebene E1 zur Symmetrieachse A1 einschliessen.

Vorzugsweise haben alle Einlassbohrungen 21 den gleichen Durchmesser D4. Alternativ kann der Durchmesser D4 jeder der Einlassbohrungen 21 auch individuell vorgegeben sein. Der Wasseraufbereiter kann beispielsweise ein Mantelrohr 1 mit einem Innendurchmesser D2 von 22mm umfassen. Das Düsenrohr 13 eines solchen Wasseraufbereiters hat anströmseitig typischerweise einen Aussendurchmesser D1 im Bereich von etwa 12mm bis etwa 18mm und eine Wandstärke in der Grössenordnung von etwa 2.5mm bis 3.5mm bzw. einen Innendurchmesser D3 von etwa 7mm bis 12mm. Die Breite des Ringraums 20, durch den Wasser in die Einlassbohrungen 21 einströmen kann, liegt demnach im Bereich von etwa 2mm bis 5mm. Die Länge L3 des Ringraums 20 kann beispielsweise in der Grössenordnung von etwa 6mm bis 8mm liegen. Bei solchen Düsen 9 liegt der Durchmesser D4 der Einlassbohrungen 21 typischerweise im Bereich von etwa 2mm bis 5mm. Die Länge L1 der Wirbelkammer 19 liegt typischerweise in der Grössenordnung von etwa 15mm bis 25mm. Der Innendurchmesser D3 bzw. allgemein der freie Strömungsquerschnitt des Düsenrohrs 13 ist einströmseitig auf einer Länge von etwa zwei Dritteln der Wirbelkammerlänge L1 konstant. Daran anschliessend vergrössert sich der Innendurchmesser D3 trichterartig. Die Wandung des Trichters kann wie im Längsschnitt in Figur 1 dargestellt linear sein oder alternativ konkav oder konvex gekrümmt (nicht dargestellt). Dabei kann die Erweiterung des Strömungsquerschnitts kontinuierlich oder stufenweise erfolgen. Die Form des Trichters ist ein geometrischer Parameter, mit dem die Wirkung der Düse 9 auf den Wasserstrom beeinflusst werden kann.

Angrenzend an die Düse 9 ist der Strömungsquerschnitt durch den Innendurchmesser D2 des Mantelrohrs 1 bestimmt. Geometrische Parameter der Düse 9, insbesondere auch die Anzahl, Grösse, Anordnung und Ausrichtung der Einlassbohrungen 21, sind nebst dem anströmseitigen Wasserdruck mitbestimmend dafür, wie ein Wasserstrom durch die Düse 9 beeinflusst wird. Sie wirken sich aus auf Faktoren wie Rotationsgeschwindigkeiten, Druck und Turbulenzgrad der Wasserströmung in und nach der Wirbelkammer 19.

Bei Mantelrohren 1 mit anderen Innendurchmessern D2 können die vorherstehend angegebenen typischen Werte bzw. Wertebereiche der geometrischen Parameter entsprechend der gewünschten Wirkung auf den Wasserstrom insbesondere proportional angepasst werden.

Die Länge L2 des ausgangsseitigen Abschnitts des Mantelrohrs 1 kann grundsätzlich frei gewählt und bei Bedarf an unterschiedlichen Anforderungen für den Einbau des Wasseraufbereiters in eine Wasserleitung oder eine Wasseraufbereitungsanlage abgestimmt werden.

Vorzugsweise ist die Düse 9 nahe bei der Einlassöffnung 3 des Mantelrohrs 1 angeordnet. Dies erleichtert den Einbau und die Befestigung der Düse 9 im Mantelrohr 1.

Der Wasseraufbereiter umfasst eine Magnetanordnung mit mindestens einem Permanentmagneten 11, fortan auch kurz Magnet 11 genannt. Jeder Magnet 11 ist aussen am Mantelrohr 1 befestigt, z.B. festgeklebt oder mittels einer Halte- oder Klemmvorrichtung wie beispielsweise einer elastischen Manschette gehalten. Vorzugsweise sind das Mantelrohr 1 und die Magnetanordnung von einem Gehäuse oder einer Schutzhülle ummantelt (nicht dargestellt). Jeder Magnet 11 ist im Bereich der Düse 9 oder im auslassseitigen Abschnitt des Mantelrohrs 1 angeordnet. Vorzugsweise sind mehrere Magnete 11 axial und/oder zirkulär verteilt aussen am Mantelrohr 1 befestigt. Insbesondere können am Mantelrohr 1 Magnete 11 angeordnet sein, die sich paarweise diametral gegenüberliegen.

Die Magnete 11 können kostengünstige Rundmagnete sein. Alternativ kann der Wasseraufbereiter auch Magnete 11 mit anderen Bauformen umfassen. Das Mantelrohr 1 ist in der Regel zylindrisch ausgebildet. Alternativ kann die Aussenseite des Mantelrohrs 1 ein Mehrkantprofil sein, das beispielsweise vier bis acht ebene Flächenabschnitte zum einfachen Befestigen der Magnete 11 in einer vorgegebenen Lage umfasst (nicht dargestellt).

Bei der in Figur 1 dargestellten Ausführungsform des Wasseraufbereiters sind im Bereich des Düsenrohrs 13 bei der trichterförmigen Aufweitung der Wirbelkammer 19 sowie in Richtung der Mantelrohrachse A1 entfernt dazu bei der Auslassöffnung 5 je vier Magnete 11 um jeweils 90° versetzt zueinander aussen am Mantelrohr 1 angeordnet. Polare und/oder geladene Teilchen des rotierenden Wasserstroms passieren somit zwei Zonen, in denen die Richtung und Stärke der magnetischen Flussdichte lokal grosse Unterschiede aufweisen. Dadurch wirken auf diese Teilchen schnell ändernde Kräfte und/oder Drehmomente.

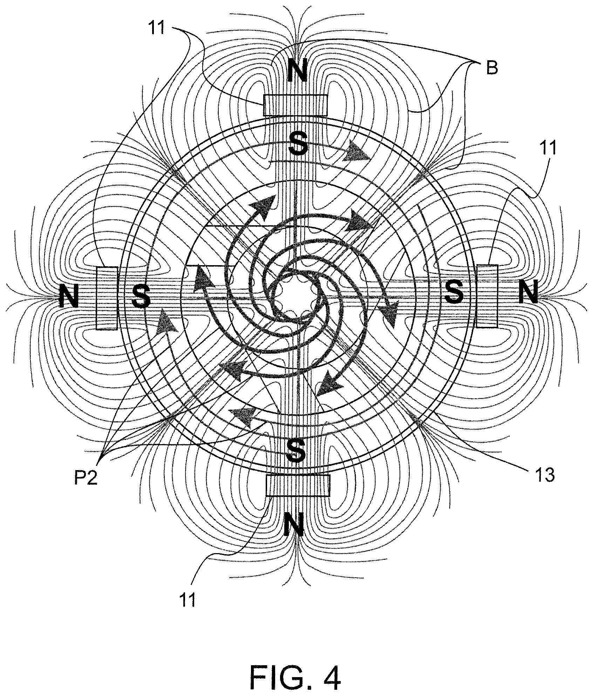

Figur 4 zeigt beispielhaft einen Querschnitt des Wasseraufbereiters in der ersten Zone, wobei die Wirbelströmung im Trichter der Wirbelkammer 19 und im auslassseitigen Abschnitt des Mantelrohrs 1 durch Strömungspfeile P2 dargestellt ist. Die mit S bezeichneten magnetischen Südpole der vier Magnete 11 sind alle dem Mantelrohr 1 zugewandt. Alternativ könnten auch alle magnetischen Nordpole N dem Mantelrohr 1 zugewandt sein. Zusätzlich sind in Figur 4 auch die Feldlinien B der magnetischen Flussdichte dargestellt. Pro volle Umdrehung passiert jedes Teilchen im rotierenden Wasserstrom achtmal alternierend Bereiche mit hoher und mit niedriger Flussdichte. Innerhalb des Mantelrohrs 1 sind die Feldlinien B im Wesentlichen zumindest näherungsweise radial und damit orthogonal zum rotierenden Wasserstrom ausgerichtet. Die auf geladene und/oder polare Teilchen wirkenden Kräfte bzw. Drehmomente können so maximiert werden. Zudem ändert bei jedem Flussdichtemaximum die Richtung Flussdichte zwischen radial nach innen und radial nach aussen.

Die Düse 9 ist vorzugsweise einstückig ausgebildet. Sie ist in der Regel aus einem nicht oder nur geringfügig ferromagnetischen Material gefertigt, beispielsweise aus Alubronze oder Kunststoff. Magnete 11 können deshalb auch im Bereich der Düse 9 angeordnet werden, wo die Wirkung auf geladene und polare Teilchen besonders vorteilhaft ist.

## Patentansprüche

1. Wasseraufbereiter, umfassend ein Mantelrohr (1) mit einer Einlassöffnung (3) und einer Auslassöffnung (5), eine im Mantelrohr (1) angeordnete Düse (9) sowie eine Magnetanordnung mit mindestens einem Magneten (11), **dadurch gekennzeichnet, dass** die Düse (9) ein Düsenrohr (13) umfasst, das eine Wirbelkammer (19) mit einer auslassseitigen Mündungsöffnung (15) begrenzt, dass ein einlassseitiges Ende des Düsenrohrs (13) durch eine Anströmkappe (17) verschlossen ist, und dass die Wandung des Düsenrohrs (13) mindestens eine Einlassbohrung (21) umfasst, die einen einlassseitigen Abschnitt des Mantelrohrs (1) mit der zu einem auslassseitigen Abschnitt des Mantelrohrs (1) hin offenen Wirbelkammer (19) verbindet.

2. Wasseraufbereiter nach Anspruch 1, **dadurch gekennzeichnet, dass** der Strömungsquerschnitt der mindestens einen Einlassbohrung (21) kleiner ist als der Strömungsquerschnitt der auslassseitigen Mündungsöffnung (15) des Düsenrohrs (13).

3. Wasseraufbereiter nach Anspruch 1 oder 2, **dadurch gekennzeichnet, dass** sich der Innendurchmesser (D3) des Düsenrohrs (13) zur Mündungsöffnung (15) hin trichterartig erweitert.

4. Wasseraufbereiter nach einem der Ansprüche 1 bis 3, **dadurch gekennzeichnet, dass** die mindestens eine Einlassbohrung (21) tangential in die Wirbelkammer (19) mündet.

5. Wasseraufbereiter nach einem der Ansprüche 1 bis 4, **dadurch gekennzeichnet, dass** die Einlassbohrung (21) unter einem Neigungswinkel α von 60° bis 90° geneigt zur Achse (A1) des Mantelrohrs (1) angeordnet ist.

6. Wasseraufbereiter nach einem der Ansprüche 1 bis 5, **dadurch gekennzeichnet, dass** mehrere Einlassbohrungen (21) gleichmässig verteilt am Düsenrohr (13) angeordnet sind.

7. Wasseraufbereiter nach einem der Ansprüche 1 bis 6, **dadurch gekennzeichnet, dass** der mindestens eine Magnet (11) im auslassseitigen Abschnitt des Mantelrohrs (1) oder im Bereich der Düse (9) an der Aussenseite des Mantelrohrs (1) angeordnet ist.

8. Wasseraufbereiter nach einem der Ansprüche 1 bis 7, **dadurch gekennzeichnet, dass** mehrere Magnete (11) im Bereich der Düse (9) und/oder im auslassseitigen Abschnitt des Mantelrohrs (1) gleichmässig verteilt am Mantelrohr (1) angeordnet sind.

9. Gerät mit einer Wasserleitung, **dadurch gekennzeichnet, dass** die Wasserleitung einen Wasseraufbereiter nach einem der Ansprüche 1 bis 8 umfasst.

10. Verfahren zum Aufbereiten von Leitungswasser mit einem Wasseraufbereiter nach einem der Ansprüche 1 bis 8, **dadurch gekennzeichnet, dass** ein Wasserstrom im Mantelrohr (1) beim Durchströmen der mindestens einen Einlassbohrung (21) umgelenkt und in der Wirbelkammer (19) in eine Wirbelströmung umgewandelt wird, und dass diese Wirbelströmung das statische Magnetfeld des mindestens einen Magneten passiert.

11. Verfahren nach Anspruch 10,
**dadurch gekennzeichnet,**
**dass** die Wirbelströmung im Bereich der Wirbelkammer (19) und/oder weiter stromabwärts im auslassseitigen Abschnitt des Mantelrohrs (1) das Magnetfeld eines oder mehrerer Magnete (11) passiert.

## Claims

1. A water treatment device, comprising a casing tube (1) with an inlet opening (3) and an outlet opening (5), a nozzle (9) arranged in the casing tube (1) as well as a magnet arrangement with at least one magnet (11), **characterized in that** the nozzle (9) comprises a nozzle tube (13) delimiting a swirl chamber (19) with a discharge opening (15) on the outlet side,
**in that** an end of the nozzle tube (13) on the inlet side is closed off by a flow cap (17), and
**in that** the wall of the nozzle tube (13) comprises at least one inlet bore (21) connecting a portion of the casing tube (1) on the inlet side with the swirl chamber (19) open towards a portion of the casing tube (1) on the outlet side.

2. The water treatment device according to Claim 1, **characterized in that** the flow cross-section of the at least one inlet bore (21) is smaller than the flow cross-section of the discharge opening (15) of the nozzle tube (13) on the outlet side.

3. The water treatment device according to Claim 1 or 2, **characterized in that** the inner diameter (D3) of the nozzle tube (13) expands in a funnel-like manner toward the discharge opening (15).

4. The water treatment device according to any one of Claims 1 to 3, **characterized in that** the at least one inlet bore (21) discharges tangentially into the swirl chamber (19).

5. The water treatment device according to any one of Claims 1 to 4, **characterized in that** the inlet bore (21) is arranged at an incline relative to the axis (A1) of the casing tube (1) at an incline angle α of 60° to 90°.

6. The water treatment device according to any one of Claims 1 to 5, **characterized in that** several inlet bores (21) are arranged equidistantly on the nozzle tube (13).

7. The water treatment device according to any one of Claims 1 to 6, **characterized in that** the at least one magnet (11) is arranged in the portion of the casing tube (1) on the outlet side or in the region of the nozzle (9) on the outer side of the casing tube (1).

8. The water treatment device according to any one of Claims 1 to 7, **characterized in that** several magnets (11) are arranged equidistantly on the casing tube (1) in the region of the nozzle (9) and/or in the portion of the casing tube (1) on the outlet side.

9. An appliance with a water pipe, **characterized in that** the water pipe comprises a water treatment device according to any one of Claims 1 to 8.

10. A method for treating tap water with a water treatment device according to any one of Claims 1 to 8, **characterized in that** a water flow in the casing tube (1) is redirected upon flowing through the at least one inlet bore (21) and transformed into a swirl flow in the swirl chamber (19), and **in that** said swirl flow passes through the static magnetic field of the at least one magnet.

11. The method according to Claim 10, **characterized in that** the swirl flow passes through the magnetic field of one or several magnets (11) in the region of the swirl chamber (19) and/or further downstream in the portion of the casing tube (1) on the outlet side.

## Revendications

1. Dispositif de traitement de l'eau, comprenant un tube enveloppe (1) avec une ouverture d'admission (3) et une ouverture de sortie (5), une buse (9) disposée dans le tube enveloppe (1) ainsi qu'un agencement d'aimant avec au moins un aimant (11),
**caractérisé en ce que** la buse (9) comprend un tube de buse (13), lequel limite une chambre de turbulence (19) avec une embouchure (15) côté sortie,
**en ce qu'**une extrémité du tube de buse (13) côté admission est fermée par un bouchon d'arrivée de courant (17), et **en ce que** la paroi du tube de buse (13) comprend au moins un alésage d'admission (21), lequel relie une section du tube enveloppe (1) côté admission avec la chambre de turbulence (19) ouverte vers une section du tube enveloppe (1) côté sortie.

2. Dispositif de traitement de l'eau selon la revendication 1, **caractérisé en ce que** la section transversale d'écoulement de l'au moins un alésage d'admission (21) est inférieure à la section transversale d'écoulement de l'embouchure (15) côté sortie du tube de buse (13).

3. Dispositif de traitement de l'eau selon la revendication 1 ou 2, **caractérisé en ce que** le diamètre intérieur (D3) du tube de buse (13) s'élargit en entonnoir vers l'embouchure (15) .

4. Dispositif de traitement de l'eau selon l'une des revendications 1 à 3, **caractérisé en ce que** l'au moins un alésage d'admission (21) débouche de façon tangentielle dans la chambre de turbulence (19).

5. Dispositif de traitement de l'eau selon l'une des revendications 1 à 4, **caractérisé en ce que** l'alésage d'admission (21) est disposé de façon incliné par rapport à l'axe (A1) du tube enveloppe (1), avec un angle d'inclinaison α de 60° à 90°.

6. Dispositif de traitement de l'eau selon l'une des revendications 1 à 5, **caractérisé en ce que** plusieurs alésages d'admission (21) sont distribués de façon régulière sur le tube de buse (13).

7. Dispositif de traitement de l'eau selon l'une des revendications 1 à 6, **caractérisé en ce que** l'au moins un aimant (11) est disposé dans la section du tube enveloppe (1) côté sortie ou dans la zone de la buse (9) du côté extérieur du tube enveloppe (1).

8. Dispositif de traitement de l'eau selon l'une des revendications 1 à 7, **caractérisé en ce que** plusieurs aimants (11) dans la zone de la buse (9) et/ou dans la section côté sortie du tube enveloppe (1) sont distribués de façon régulière sur le tube enveloppe (1).

9. Appareil avec une conduite d'eau, **caractérisé en ce que** la conduite d'eau comprend un dispositif de traitement de l'eau selon l'une des revendications 1 à 8.

10. Procédé pour le traitement d'eau potable avec un dispositif de traitement de l'eau selon l'une des revendications 1 à 8, **caractérisé en ce qu'**un courant d'eau dans le tube enveloppe (1) est dévié lors de la traversée de l'au moins un alésage d'admission (21) et est converti en un écoulement turbulent dans la chambre de turbulence (19), et **en ce que** cet écoulement turbulent passe par le champ magnétique statique de l'au moins un aimant.

11. Procédé selon la revendication 10, **caractérisé en ce que** l'écoulement turbulent passe par le champ magnétique d'un ou plusieurs aimants (11), dans la zone de la chambre de turbulence (19) et/ou dans la section côté sortie du tube enveloppe (1) plus loin en aval.
